# EUROPEAN PATENT SPECIFICATION

(11) **EP 3 556 598 B1**
(45) Date of publication and mention of the grant of the patent: **04.05.2022**
(21) Application number: 18168548.8
(22) Date of filing: 20.04.2018
(51) Int. Cl.: B60L 58/24, B60L 58/26, H01M 6/50, H01M 10/613, H01M 10/625, H01M 10/6569, H01M 10/658, H01M 10/659

(54) **BATTERY PACK FOR A VEHICLE, IN PARTICULAR FOR A HYBRID VEHICLE OR AN ELECTRIC VEHICLE**
BATTERIEPACK FÜR EIN FAHRZEUG, INSBESONDERE EIN HYBRIDES ODER ELEKTRISCHES FAHRZEUG
ENSEMBLE DE BATTERIES POUR VEHICULE HYBRIDE OU ELECTRIQUE

(43) Date of publication of application: 23.10.2019
(73) Proprietor: FCA Italy S.p.A., 10135 Torino (IT)
(72) Inventor: CRIVELLARI, Mr. Attilio, I-10135 Torino (IT); DI SCIULLO, Mr. Fausto, I-10135 Torino (IT); FERRARIS, Mr. Walter, I-10135 Torino (IT)
(74) Representative: Notaro, Giancarlo

(56) References cited:
- EP-A1- 2 187 473
- WO-A1-2013/174277
- US-A1- 2014 011 059
- US-A1- 2016 264 018

## Description

### Field of the invention

The present invention relates to battery packs for vehicles, in particular for hybrid vehicles or electric vehicles, of the type comprising:
- a casing
- a group of battery cells, arranged within the casing,
- a control circuit, also arranged within the casing, and
- an autonomous cooling system arranged within the casing and configured to cool the battery cells.

### Prior art

Battery packs of the type indicated above are able to constantly monitor the temperature of the battery cells, so as to keep this temperature within a range of values that ensures reliable and efficient operation. However, the solutions of this type that have been proposed up to now are relatively complex and expensive and above all involve quite large dimensions, which are not adapted to the need to place the battery pack in areas of the vehicle (for example under the seats) where the available space is limited.

A battery pack containing cooling fans for activating a flow of refrigerating air through the battery cells is known from EP 2 187 473 A1. US 2014/011059 A1 discloses a circuit for a refrigerant fluid associated to a battery pack, with part of the refrigerant fluid circuit located outside the battery pack.

### Object of the invention

The object of the present invention is, therefore, that of producing a battery pack that has a relatively simple and low-cost structure, and that above all is dimensionally compact, in particular in the vertical direction.

A further object of the invention is to provide the aforesaid objective while ensuring - in any case - an efficient and reliable control of the temperature of the battery cells.

An additional object of the invention is that of producing a battery pack that is simple to assemble and inexpensive to construct.

### Summary of the invention

In view of achieving one or more of the aforesaid objects, the invention relates to a battery pack having the characteristics of claim 1.

Thanks to the aforesaid arrangement, the battery pack according to the invention provides an efficient and reliable control of the temperature of the battery cells, with a cooling system that is constructively simple and above all extremely compact in the vertical direction.

Furthermore, thanks to the aforesaid characteristics, high efficiency in controlling the temperature of the battery cells is achieved.

According to a further preferred characteristic, the bottom wall of the casing has an outer surface defining a plurality of cooling fins, designed to increase the heat exchange surface with the surrounding environment. Moreover, in an exemplary actual embodiment, the aforesaid bottom wall is part of a lower casing element, which includes the bottom wall, two side walls and two end walls, said casing also comprising a top cover mounted above the lower casing element.

Also in the case of the preferred embodiment, the casing has an inner partition wall which defines a first chamber containing the group of battery cells and a second chamber containing the aforesaid compressor and the aforesaid control circuit.

Preferably, a liquid or solid material is interposed between the group of battery cells and the aforesaid walls of thermally insulating material, which allows the temperature between the cells of the battery itself to be uniform. For this purpose, a naturally dielectric phase change material can also be used. Phase Change Materials (PCM) are known and have been used for some time due to their ability to store and release heat, changing phase. There are also PCMs that have a solid/liquid phase transition and vice versa, capable of absorbing and releasing high amounts of heat.

In the preferred embodiment, electric heating devices are also interposed between the lower side of the battery unit and the wall of thermally insulating material associated therewith, which allow the temperature of the group of battery cells to be raised when the vehicle is in a low temperature environment.

Again, according to a further preferred characteristic, the casing of the battery pack has an opening in which a pressure compensation valve is arranged between the inner environment of the casing and the external environment. Preferably, a dehydrator device of any known type is also provided for reducing the humidity inside the casing.

### Detailed description of a preferred embodiment

Further characteristics and advantages of the invention will become apparent from the description that follows with reference to the attached drawings, provided purely by way of non-limiting example, wherein:

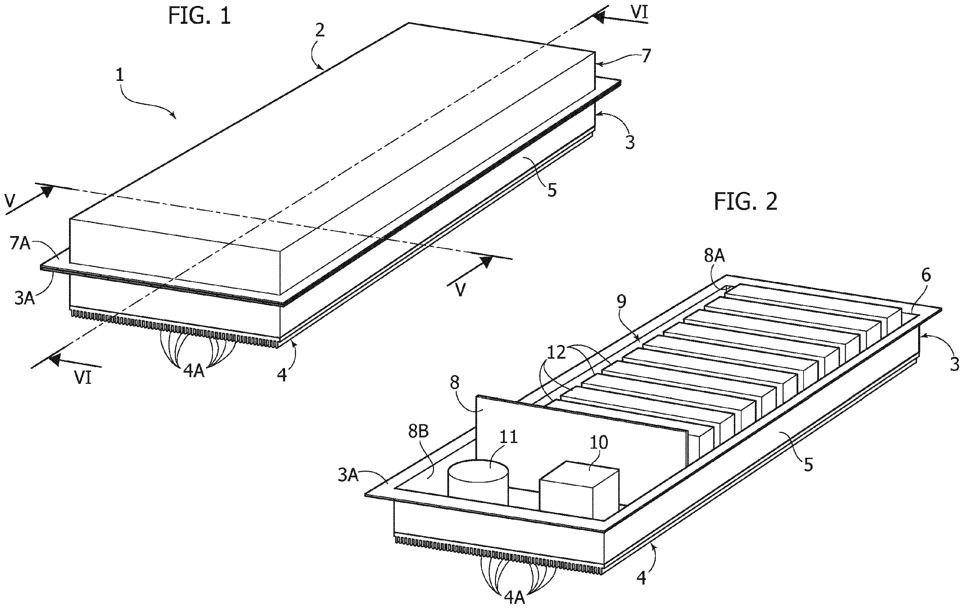

- Figure 1 is a schematic perspective view of an embodiment of the battery pack according to the invention,
- Figure 2 is a schematic perspective view of the battery pack of Figure 1, with the cover of the casing of the battery pack removed,
- Figure 3 is an additional perspective view of the battery pack of Figures 1, 2, in which the panel positioned above the group of battery cells has also been removed, so as to render the battery cells visible,
- Figure 4 is a perspective view from below of the battery pack of Figures 1-3,
- Figure 5 is a cross-sectional view according to the line V-V of Figure 1, on an enlarged scale,
- Figures 5A, 5B illustrate - on an enlarged scale - the details indicated by the arrows A and B in Figure 5,
- Figure 6 is a cross-sectional view according to the line VI-VI of Figure 1, on an enlarged scale, and
- Figure 7 is a schematic and exploded perspective view of the components of the cooling system of which the battery pack according to the invention is provided.

In the drawings, numeral 1 indicates a battery pack for a hybrid vehicle or an electric vehicle, comprising a casing 2 including a lower casing element 3 having a bottom wall 4, two side walls 5 and two end walls 6. A cover 7 is mounted above the lower casing element 3, which delimits the space inside the casing, together with the lower element 3.

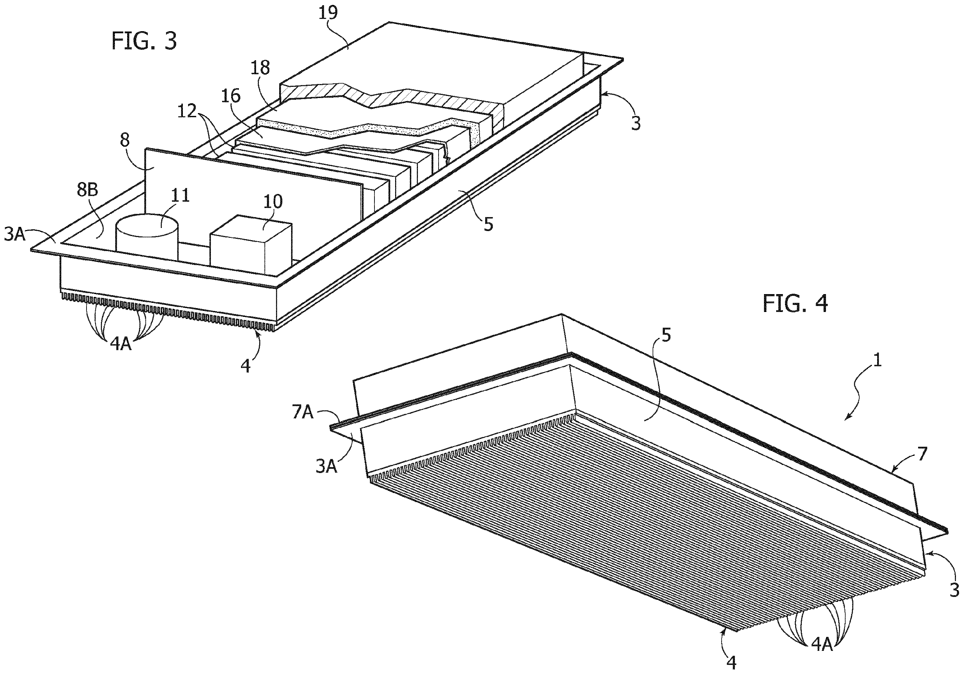

Inside the casing 2, a partition wall 8 (Figure 3) is included, which defines a main chamber 8A inside the casing, in which a group 9 of battery cells is arranged, and an auxiliary chamber 8B, separated from the chamber 8A, in which an electronic control unit 10 and a unity 11 including a compressor with an associated electric drive motor are housed. These components are illustrated in the drawings in a schematic way only, and are not described herein, since they can be made in any known manner, and do not fall, taken separately, within the scope of the present invention.

The group of battery cells 9 includes an array of cells 12 arranged side-by-side to each other, but mutually spaced-apart. As illustrated in Figure 3, the battery cells 12 are elongated in a direction transverse to the longitudinal direction of the casing 2 and fill the inner chamber 8A. The cells 12 have upper surfaces and lower surfaces substantially coplanar to each other.

The figures show an embodiment example of the casing 2, in which the lower element 3 of the casing and the cover 7 have peripheral coupling flanges 3A and 7A, which can be joined together by means of removable coupling means of any known type.

In the illustrated example (see in particular Figure 4), the bottom wall 4 of the lower element 3 of the casing has its outer surface defining a plurality of parallel and spaced-apart fins 4A, for the object of increasing the surface of heat exchange with the external environment. The advantage of this arrangement will be clearer below, in the light of the description of the cooling system of which the battery pack is provided.

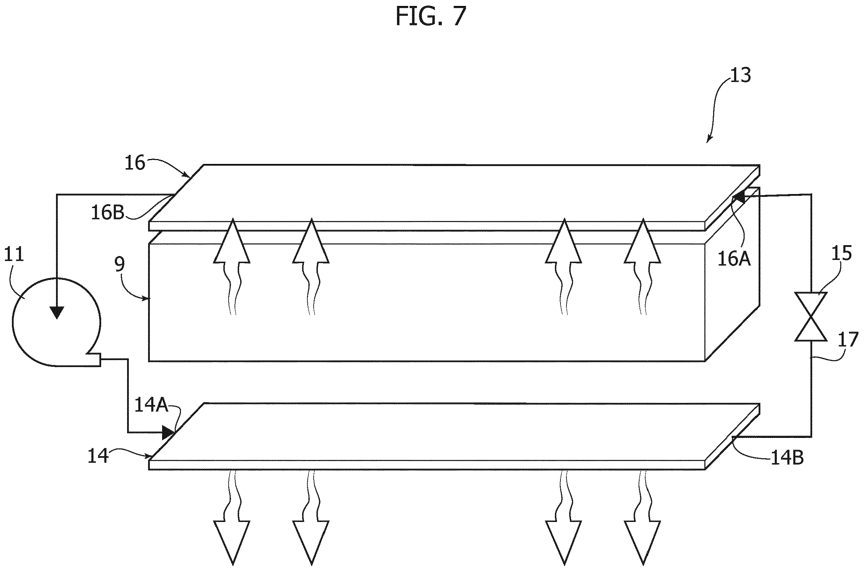

With reference in particular to Figure 7, the battery pack 1 includes an autonomous cooling system 13 including a circuit for a refrigerant fluid. This circuit comprises the compressor 11, driven by an electric motor, a condenser 14, which receives the compressed fluid from the compressor 11, an expansion device 15, for expanding the fluid coming from the condenser 14, an evaporator 16, which receives expanded fluid from the expansion device 15 and supplies it to the compressor 11. The expansion device 15 can also be formed by just one orifice provided in the line 17, which connects the outlet of the condenser 14 with the inlet of the evaporator 16.

According to an important characteristic of the present invention, the condenser 14 and the evaporator 16 are each formed of a hollow panel, for example of metal material, having a single inner chamber communicating with an inlet and an outlet of the panel arranged on opposite sides of the panel. With reference to Figure 7, the panel forming the condenser 14 has an inlet 14A, which receives the compressed fluid from the compressor 11, and an outlet 14B from which the fluid is fed towards the expansion device 15. The panel forming the evaporator 16 has an inlet 16A, which receives expanded fluid from the expansion device 15, and an outlet 16B from which the fluid is supplied to the compressor 11.

As is evident in the drawings, the two panels 14, 16 forming the condenser and the evaporator of the cooling system are arranged adjacent to two opposite major faces of the group 9 of the battery cells 12.

When the cooling system 13 active, therefore, the heat of the battery cells 12 is removed from the evaporator 16.

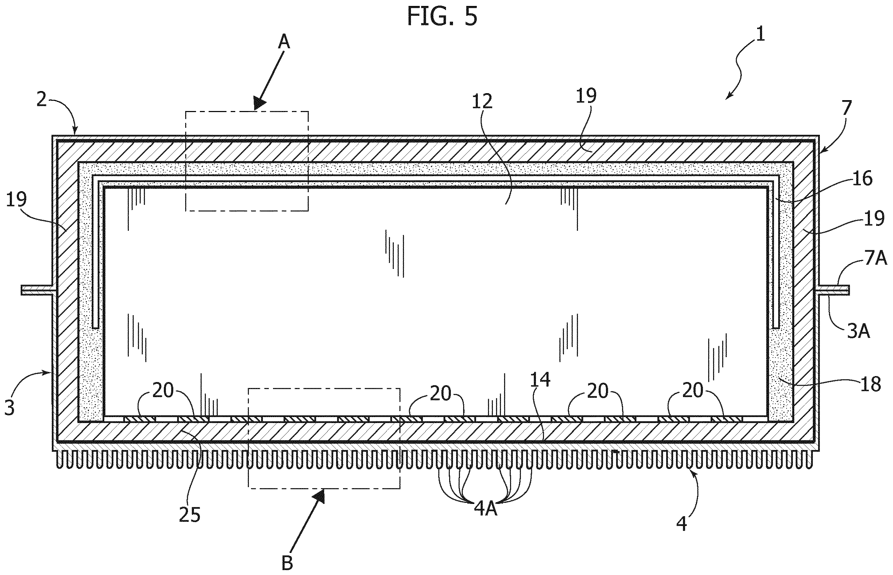

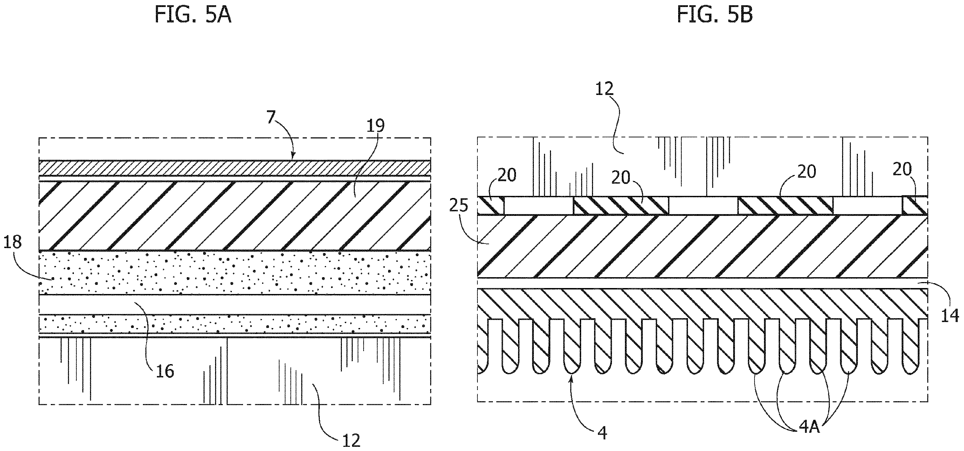

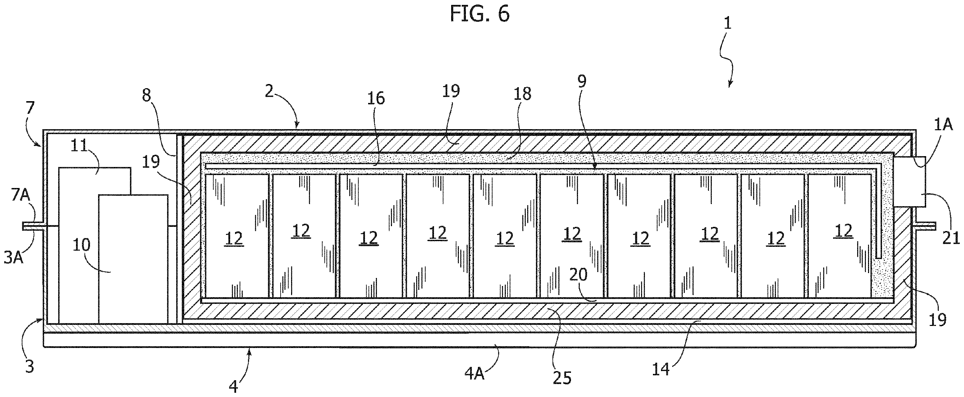

With reference in particular to Figures 5, 5A, 5B and 6, the panel 14 forming the chamber of the cooling system rests on the inner surface of the bottom wall 4 inside the chamber 8A of the casing containing the 9 of the battery cells. The group 9 is placed above the panel 14 with the interposition of a wall 25 of thermally insulating material. This drastically reduces or completely eliminates any heat transfer from the condenser panel 14 to the battery cells 12, while the fins 4A of the bottom wall 4 of the casing encourage heat dissipation from the condenser panel 14.

Again with reference to Figures 5, 6, a wall 18 is provided within the casing 2, consisting of a PCM, which covers the upper side of the group 9 of the battery cells 12, filling the spaces between the individual cells 12, and also covers the end sides of the cells 12. As already indicated above, the PCMs have been known and used for some time. In the illustrated example, any known PCM of the solid/liquid transition type can be provided.

As illustrated in Figure 5, the evaporator panel 16 is embedded in the PCM wall 18. The function of the wall 18 is to make the temperature of the group of battery cells as uniform as possible.

As can also be seen in Figures 5, 5A, 5B and 6, additional walls 19 of thermally insulating material are provided inside the casing 2 covering the upper side, the side surfaces and the end surfaces of the group 9 of the battery cells 12, inside the chamber 8A.

In the case of the preferred embodiment illustrated herein, in contact with the lower side of the battery cells 12, electrical conductors 20 (Figures 5, 6 and 5B) are provided in the form of strips parallel to each other and spaced apart, configured to act as heaters. These heaters are activated when the vehicle is in a very cold environment, whereby a battery cell heating 12 is required.

In general, the control unit 10 automatically activates the cooling system 13 and the heaters 20 as a function of signals emitted by temperature sensors, including, for example, one or more temperature sensors of the battery cell group 9 (not illustrated) and an ambient temperature sensor. The control unit 10 is programmed according to one or more predetermined programs to ensure that the battery pack 1 always operates in an ideal temperature range for correct and efficient operation.

Again with reference to Figure 6, the casing 1 can be provided with an opening 1A in which a compensation valve 21 of any known type is arranged, configured to uniform the pressures inside and outside the arranged, configured to uniform the pressures inside and outside the casing 2. A dehydrator device of any known type can also be associated with the battery pack.

As is evident from the above description, the battery pack according to the invention has a relatively simple and low-cost structure, and is able to operate efficiently, ensuring that the battery cells are constantly kept within a predetermined temperature range. All the aforesaid results are obtained with a battery pack that is dimensionally very compact, especially in the vertical direction, which makes it easy to place the battery pack in any suitable position within a vehicle.

Naturally, without prejudice to the principle of the invention, the details of construction and the embodiments may vary widely with respect to those described and illustrated purely by way of example, without departing from the scope of the present invention.

## Claims

1. A battery pack for a vehicle, in particular for a hybrid vehicle or an electric vehicle, comprising:
- a casing (2),
- a group (9) of battery cells, arranged within the casing (2),
- a control circuit (10), also arranged within the casing (2),
- an autonomous cooling system (13) arranged within the casing (2) and configured to cool the battery cells (12),
said battery pack (1) being **characterized in that** said cooling system (13) which is arranged within the casing of the battery pack includes a circuit for a refrigerant fluid (10), comprising:
- a compressor (11), actuated by an electric motor,
- a condenser (14), which receives compressed fluid from the compressor (11),
- an expansion device (15), to expand the fluid coming from the condenser (14), and
- an evaporator (16), which receives expanded fluid from said expansion device (15) and supplies the fluid to said compressor (11), wherein
- said condenser (14) and said evaporator (16) forming part of the refrigerant fluid circuit consist of two hollow panels arranged adjacent to two opposite major faces of said group (9) of battery cells, each hollow panel having a single inner chamber communicating with an inlet (14B,16B) and an outlet (14B,16B) of the panel, arranged on two opposite sides of the panel,
- the hollow panel forming the condenser (14) of said cooling system (13) is placed in contact with a bottom wall (4) of said casing of the battery pack (1), below the group (9) of battery cells,
- a wall (25) of thermally insulating material is interposed between the condenser panel (14) and the lower side of the battery cell group (9),
- the hollow panel forming the evaporator (16) of said cooling system (13) is arranged above the group (9) of battery cells,
- walls (19) of thermally insulating material are arranged above the evaporator panel (16) and above the battery cell group (9), and around the side walls of the battery cell group.

2. A battery pack according to claim 1, **characterized in that** the bottom wall (4) of the casing (2) has an outer surface defining a plurality of cooling fins (4A), designed to increase the heat exchange surface with the surrounding environment.

3. A battery pack according to claim 2, **characterized in that** said bottom wall (4) is part of a lower casing element (3), which includes said bottom wall (4), two side walls (5) and two end walls (6), and **in that** said casing (2) also comprises an upper cover (7) mounted above the lower casing element (3).

4. A battery unit according to claim 3, **characterized in that** the casing (2) has an inner partition wall (8) that defines a first chamber (8A) containing the group (9) of battery cells, and a second chamber (8B), containing said compressor (11) and said control circuit (10).

5. A battery pack according to claim 1, **characterized in that** at least one wall (18) of phase change material is interposed between the group (9) of battery cells and the walls (19) of thermally insulating material.

6. A battery pack according to claim 1, **characterized in that** electric heating devices are interposed between the lower side of the group (9) of battery cells and the wall (25) of thermally insulating material associated therewith.

7. A battery pack according to claim 1, **characterized in that** the casing (2) has an opening (1A) wherein a pressure compensation valve (21) is arranged, to compensate the pressure between the environment inside the casing and the external environment.

8. A battery pack according to claim 1, **characterized in that** it includes a dehydrator device to reduce humidity within the casing (2).

## Patentansprüche

1. Batteriepack für ein Fahrzeug, insbesondere für ein Hybridfahrzeug oder ein Elektrofahrzeug, umfassend:
- ein Gehäuse (2),
- eine Gruppe (9) von Batteriezellen, die im Innern des Gehäuses (2) angeordnet sind,
- einen Steuerkreis (10), der ebenfalls im Innern des Gehäuses (2) angeordnet ist,
- ein unabhängiges Kühlsystem (13), das im Innern des Gehäuses (2) angeordnet und gestaltet ist, um die Batteriezellen (12) zu kühlen,
wobei das Batteriepack (1) **dadurch gekennzeichnet ist, dass** das Kühlsystem (13), welches im Innern des Gehäuses des Batteriepacks angeordnet ist, einen Kreislauf für ein Kühlfluid (10) enthält, umfassend:
- einen Kompressor (11), der von einem Elektromotor angetrieben wird,
- einen Kühler (14), der komprimiertes Fluid von dem Kompressor (11) aufnimmt,
- eine Expansionsvorrichtung (15) zum Expandieren des vom Kühler (14) kommenden Fluides, und
- einen Verdampfer (16), der expandiertes Fluid von der Expansionsvorrichtung (15) aufnimmt und das Fluid dem Kompressor (11) zuführt,
wobei
- der Kühler (14) und der Verdampfer (16), die Teil des Kühlfluidkreislaufes bilden, aus zwei Hohlplatten bestehen, die zwei gegenüberliegenden Hauptflächen der Gruppe (9) von Batteriezellen benachbart angeordnet sind, wobei jede Hohlplatte eine einzelne innere Kammer aufweist, die mit einem Einlass (14B, 16B) und einem Auslass (14B, 16B) der Platte, die auf zwei gegenüberliegenden Seiten der Platte angeordnet sind, in Verbindung steht,
- die den Kühler (14) des Kühlsystems (13) bildende Hohlplatte im Kontakt mit einer Bodenwand (4) des Gehäuses des Batteriepacks (1) unter der Gruppe (9) von Batteriezellen angeordnet ist,
- eine Wand (25) aus thermisch isolierendem Material zwischen der Kühlerplatte (14) und der unteren Seite der Batteriezellengruppe (9) eingelegt ist,
- die den Verdampfer (16) des Kühlsystems (13) bildende Hohlplatte über der Gruppe (9) von Batteriezellen angeordnet ist,
- Wände (19) aus thermisch isolierendem Material über der Verdampferplatte (16) und über der Batteriezellengruppe (9) und um die Seitenwände der Batteriezellengruppe herum angeordnet sind.

2. Batteriepack nach Anspruch 1, **dadurch gekennzeichnet, dass** die Bodenwand (4) des Gehäuses (2) eine Außenfläche aufweist, die eine Vielzahl von Kühlrippen (4A) bildet, die dazu bestimmt sind, die wärmetauschende Heizfläche mit der umliegenden Umgebung zu vergrößern.

3. Batteriepack nach Anspruch 2, **dadurch gekennzeichnet, dass** die Bodenwand (4) Teil eines unteren Gehäuseelements (3) ist, welches die Bodenwand (4), zwei Seitenwände (5) und zwei Stirnwände (6) umfasst, und dadurch, dass das Gehäuse (2) außerdem eine obere Abdeckung (7) aufweist, die über dem unteren Gehäuseelement (3) befestigt ist.

4. Batterieeinheit nach Anspruch 3, **dadurch gekennzeichnet, dass** das Gehäuse (2) eine innere Trennwand (8) aufweist, die eine die Gruppe (9) von Batteriezellen enthaltende erste Kammer (8A) und eine den Kompressor (11) und den Steuerkreis (10) enthaltende zweite Kammer (8B) bildet.

5. Batteriepack nach Anspruch 1, **dadurch gekennzeichnet, dass** mindestens eine Wand (18) aus Phasenwechselmaterial zwischen der Gruppe (9) von Batteriezellen und den Wänden (19) aus thermisch isolierendem Material eingelegt ist.

6. Batteriepack nach Anspruch 1, **dadurch gekennzeichnet, dass** elektrische Heizvorrichtungen zwischen der unteren Seite der Gruppe (9) von Batteriezellen und der Wand (25) aus dazugehörigem, thermisch isolierendem Material eingelegt sind.

7. Batteriepack nach Anspruch 1, **dadurch gekennzeichnet, dass** das Gehäuse (2) eine Öffnung (1A) aufweist, in der ein Druckausgleichsventil (21) angeordnet ist, um den Druck zwischen der Umgebung im Innern des Gehäuses und der außen liegenden Umgebung auszugleichen.

8. Batteriepack nach Anspruch 1, **dadurch gekennzeichnet, dass** es eine Trocknervorrichtung enthält, um Feuchtigkeit im Innern des Gehäuses (2) zu verringern.

## Revendications

1. Ensemble de batteries pour véhicule, en particulier pour véhicule hybride ou véhicule électrique, comprenant :
- un boîtier (2),
- un groupe (9) d'éléments de batterie, agencés dans le boîtier (2),
- un circuit de commande (10), également agencé dans le boîtier (2),
- un système de refroidissement autonome (13) agencé dans le boîtier (2) et configuré pour refroidir les éléments de batterie (12),
ledit bloc-batterie (1) étant **caractérisé en ce que** ledit système de refroidissement (13) qui est agencé dans le boîtier du bloc-batterie comprend un circuit pour un fluide frigorigène (10), comprenant :
- un compresseur (11), actionné par un moteur électrique,
- un condenseur (14), qui reçoit le fluide comprimé du compresseur (11),
- un dispositif de détente (15), pour détendre le fluide provenant du condenseur (14), et
- un évaporateur (16), qui reçoit le fluide détendu dudit dispositif de détente (15) et fournit le fluide audit compresseur (11),
dans lequel
- ledit condenseur (14) et ledit évaporateur (16) faisant partie du circuit de fluide frigorigène sont constitués de deux panneaux creux agencés de manière adjacente à deux faces principales opposées dudit groupe (9) d'éléments de batterie, chaque panneau creux ayant une seule chambre interne communiquant avec une entrée (14B, 16B) et une sortie (14B, 16B) du panneau, agencées sur deux côtés opposés du panneau,
- le panneau creux formant le condenseur (14) dudit système de refroidissement (13) est placé en contact avec une paroi inférieure (4) dudit boîtier du bloc-batterie (1), en dessous du groupe (9) d'éléments de batterie,
- une paroi (25) en matériau thermiquement isolant est interposée entre le panneau de condenseur (14) et le côté inférieur du groupe d'éléments de batterie (9),
- le panneau creux formant l'évaporateur (16) dudit système de refroidissement (13) est agencé au-dessus du groupe (9) d'éléments de batterie,
- des parois (19) en matériau thermiquement isolant sont agencées au-dessus du panneau d'évaporateur (16) et au-dessus du groupe d'éléments de batterie (9), et autour des parois latérales du groupe d'éléments de batterie.

2. Ensemble de batteries selon la revendication 1, **caractérisé en ce que** la paroi inférieure (4) du boîtier (2) a une surface externe définissant une pluralité d'ailettes de refroidissement (4A), conçues pour augmenter la surface d'échange de chaleur avec le milieu environnant.

3. Ensemble de batteries selon la revendication 2, **caractérisé en ce que** ladite paroi inférieure (4) fait partie d'un élément de boîtier inférieur (3), qui comprend ladite paroi inférieure (4), deux parois latérales (5) et deux parois d'extrémité (6), et **en ce que** ledit boîtier (2) comprend également un couvercle supérieur (7) monté au-dessus de l'élément de boîtier inférieur (3).

4. Ensemble de batteries selon la revendication 3, **caractérisée en ce que** le boîtier (2) a une paroi de séparation interne (8) qui définit une première chambre (8A) contenant le groupe (9) d'éléments de batterie, et une deuxième chambre (8B), contenant ledit compresseur (11) et ledit circuit de commande (10).

5. Ensemble de batteries selon la revendication 1, **caractérisé en ce qu'**au moins une paroi (18) en matériau à changement de phase est interposée entre le groupe (9) d'éléments de batterie et les parois (19) en matériau thermiquement isolant.

6. Ensemble de batteries selon la revendication 1, **caractérisé en ce que** des dispositifs de chauffage électrique sont interposés entre le côté inférieur du groupe (9) d'éléments de batterie et la paroi (25) en matériau thermiquement isolant qui lui est associée.

7. Ensemble de batteries selon la revendication 1, **caractérisé en ce que** le boîtier (2) a une ouverture (1A) dans laquelle est agencée une soupape de compensation de pression (21), pour compenser la pression entre l'environnement à l'intérieur du boîtier et l'environnement extérieur.

8. Ensemble de batteries selon la revendication 1, **caractérisé en ce qu'**il comprend un dispositif déshydrateur pour réduire l'humidité dans le boîtier (2).
